**Europäisches Patentamt**

(19) **European Patent Office**

**Office européen des brevets**

(11) Veröffentlichungsnummer: **0 012 113**
**B1**

(12) **EUROPÄISCHE PATENTSCHRIFT**

(45) Veröffentlichungstag der Patentschrift:
24.03.82

(51) Int. Cl.³: **D 06 F 39/08, F 16 J 15/32**

(21) Anmeldenummer: **79810162.2**

(22) Anmeldetag: **21.11.79**

(54) **Anordnung zum Zuführen und Wegführen von flüssigen und/oder gasförmigen Medien zu bzw. von einem rotierenden Hohlzylinder.**

(30) Priorität: **28.11.78 CH 12180/78**

(43) Veröffentlichungstag der Anmeldung:
**11.06.80 Patentblatt 80/12**

(45) Bekanntmachung des Hinweises auf die Patenterteilung:
**24.03.82 Patentblatt 82/12**

(84) Benannte Vertragsstaaten:
**AT BE CH DE FR GB IT LU NL SE**

(56) Entgegenhaltungen:
**CH-A5-610 371**
**DE-A1-2 538 694**

(73) Patentinhaber: **White, William, Kirchweg 68,**
**CH-8102 Oberengstringen (CH)**

(72) Erfinder: **White, William, Kirchweg 68,**
**CH-8102 Oberengstringen (CH)**

(74) Vertreter: **Schmid, Rudolf et al, c/o ISLER & SCHMID**
**Patentanwaltsbureau Walchestrasse 23, CH-8006 Zürich**
**(CH)**

ACTORUM AG.

## Anordnung zum Zuführen und Wegführen von flüssigen und/oder gasfömigen Medien zu bzw. von einem rotierenden Hohlzylinder

Die vorliegende Erfindung betrifft eine Anordnung zum Zuführen und Wegführen von flüssigen und/oder gasförmigen Medien zu einem bzw. von einem liegenden rotierenden Hohlzylinder, insbesondere einer Trommelwaschmaschine, indem mit einem starr mit einem feststehenden Rahmenteil verbundenen, den Hohlzylinder umfassenden Schleusenring und beidseitig dieses Schleusenrings angeordneten Dichtungsmitteln ein Schleusenraum gebildet ist und die Verbindung vom Schleusenraum in den Hohlzylinder durch Löcher auf wenigstens einem Teil des Umfangs der Mantelfläche im Gebiet des Schleusenraumes gewährleistet ist.

Für industrielle Wäsche-Waschanlagen sind mehrere Systeme bekannt geworden, mit denen die Wäsche praktisch im Durchlaufbetrieb gewaschen wird. Die einzelnen Waschstufen, wie Vorwaschen, Waschen, Spülen, folgen zeitlich und räumlich hintereinander.

Ein erstes System, eine Karussell-Waschanlage, umfasst mehrere einzelne Waschtrommeln, die gemäss einem Waschprozesstakt an mehreren Stationen vorbeikommen. Bei jeder Station wird ein Arbeitsvorgang durchgeführt. Als nachteilig an solchen Waschanlagen kann der Umstand angesehen werden, dass die Beschickungsstation und die Entladestation örtlich nahe beieinander liegen, so dass Zuführ- und Wegführwege wenigstens stellenweise nahe beieinander liegen. Eine Waschstrasse mit zusätzlichen Stationen, wie Wäscheannahme, Wäschesortiererei, Waschen, Bügeln und Verpacken lässt sich damit nur sehr schwer realisieren.

Deshalb werden beim Bau mehrerer Waschstrassen vielfach Trommelwaschmaschinen vorgesehen, bei denen in einer liegenden, rotierenden Trommel alle Waschprozesse im Durchlaufbetrieb durchgeführt werden. Dazu ist die Trommel auf ihrer Länge in mehrere Abschnitte unterteilt und es sind Mittel vorhanden, um die Wäsche von einem Abschnitt in einen nächsten Abschnitt zu befördern.

Das Zu- und/oder das Abführen von Flotte, Spülwasser, Dampf und dergleichen wird beispielsweise mit Hilfe eines Drehkopfs durchgeführt, in den die entsprechenden Leitungen einmünden und von dem aus weitere Leitungen zu den entsprechenden Stellen in der Trommel führen. Es ist dabei fast selbstverständlich, dass die Leitungen zentral in der Trommelwaschmaschine verlaufen. Wenn nun die Weitergabe der Wäsche von einem Abschnitt zum nächstfolgenden ebenfalls zentral, nämlich durch eine zentrale Öffnung in der Trennwand zwischen zwei Abschnitten erfolgt, kann dies zu Interferenzen führen, und die Folge davon kann beispielsweise das Hängenbleiben von einzelnen Wäschestücken sein.

Eine neuere Ausbildung der Zuführung von Flüssigkeiten, die sich ausserdem auch noch für das Wegführen von Dampf und Abwasser eignet, ist die Schleuse. Eine solche Schleuse, die beispielsweise in der DE-A 2 538 694 beschrieben ist, bildet eine den Hohlzylinder umfassende Ringschleuse. Der Schleusenraum ist seitlich, in Richtung der Zylinderachse gesehen, durch zwei an der Mantelfläche des Zylinders angeschweisste Halteringe begrenzt. Jeder Haltering trägt auf seinem Umfang je eine elastische Dichtlippe. Die beiden aneinanderstossenden Partien der Dichtlippen sind gegen die Zylinderachse hin umgebogen und drücken durch ihre eigene elastische Kraft gegeneinander. Die Zylinderwand weist zwischen den Halteringen Öffnungen auf und es ist ein Element vorgesehen, um die Dichtlippen zu öffnen. Dieses Element weist beispielsweise beim Einschubende einen spindelförmigen Querschnitt auf, so dass dieses auch bei rotierenden Trommeln im eingeschobenen, die Lippen öffnenden Zustand belassen werden kann, beispielsweise zum Aufheizen der Flotte, wobei eine erste solche Schleuse mit einem als Ablauf angeordneten Element und eine zweite Schleuse mit einem als Zuführung angeordneten Element vorhanden ist. Die Verbindungsleitung zwischen den beiden Elementen ist durch einen Wärmeaustauscher geführt und muss noch mit einer Umwälzpumpe ausgerüstet sein.

Diese Schleusenanordnung hat sich in einigen Fällen als nachteilig gezeigt. Vorerst durch hohe Herstellungskosten, indem die Halteringe vorteilhafterweise als L-förmige oder als Z-förmige Bleche ausgebildet sind und dementsprechend um die Trommel herumgezogen und mit ihr verschweisst werden müssen. Das Biegen von L- oder Z-förmigen Profilen, wobei der senkrecht auf der Mantelfläche stehende Steg der Profile nicht verformt sein sollte, bietet, wie allgemein bekannt sein dürfte, grosse Schwierigkeiten und verteuert die Anordnung stark.

Demgegenüber ist im DE-U 75 01 753 eine Gleitringdichtung beschrieben, um einen die Waschtrommel umfassenden Schleusenraum zu bilden. Eine Kammerwand ist ringförmig, die Waschtrommel umfassend ausgebildet. In der Waschtrommel selbst ist eine Dichtungsfläche angebracht. Dichtungsglieder zum seitlichen Verschliessen des Schleusenraumes bestehen aus einem Ring mit einer Lippe und weisen eine Nut und Feder auf, in welche ein Gegenprofil eines mit der Kammerwand starr verbundenen Ringes formschlüssig eingreift. Die Dichtungsglieder sind mittels mit den Ringen verschraubten Druckringen gesichert. Dieser Schleusenraum wird aus wenigstens sieben formgenau bearbeiteten Einzelteilen gebildet, wovon die die Dichtungsflächen, die Ringe und die Druckringe bildenden Teile aus hochkant zu einem geschlossenen Kreis geformten Metallbändern bestehen. Dies bedingt bei ungünstigen Biegeverhältnissen weitreichende Nachbearbeitungen, die bei üblichen Trommeldurchmessern von wenigstens 1,5 m spezielle Dreh- und Schleifmaschinen verlangen. Gerade durch diese genau masshaltigen Ausbildungen ergeben sich auch Schwierigkeiten bezüglich der Längendehnungen infolge der wechselnden Temperaturen zwischen 20° und 80°C sowie des achsialen Spiels der Trommellagerung, die bei der Anwärmphase spezielle Einstellungen erfordern.

Die Aufgabe der Erfindung besteht demgemäss darin, bei einer Trommelwaschmaschine einen Schleusenraum zu schaffen, bei dem die Armaturen zum Zu- und Wegführen ortsfest angeordnet sind und bei dem keine komplizierten und auf genaue Masshaltigkeit zu bearbeitenden Teile benötigt werden. Ferner sollen auch temperaturbedingte Längenänderungen und axiales Spiel keinen Einfluss auf die Dichtungseigenschaften bei den Schleusenräumen ausüben.

Erfindungsgemäss wird dies bei einer eingangs beschriebenen Anordnung dadurch erreicht, dass die Dichtungsmittel elastische Dichtungsbänder sind, die den Schleusenring umfassen, am Umfang mittels Spannelemente dichtend gehaltert sind und deren freie Kantenpartien auf der äusseren Mantelfläche des Hohlzylinders dichtend aufliegen.

Ausführungsbeispiele der Erfindung werden nachfolgend anhand der Zeichnung beschrieben. Es zeigen:

Fig. 1 eine perspektivische Ansicht einzelner Partien einer Trommelwaschmaschine mit erfindungsgemässen Anordnungen,

Fig. 2 eine Querschnittsansicht durch den Schleusenraum gemäss einer ersten Ausführungsform der Anordnung in vergrössertem Masstab nach der Schnittlinie II–II in Fig. 5,

Fig. 3 eine Querschnittsansicht durch den Schleusenraum ähnlich derjenigen in Fig. 2 ohne Zubehör, nach der Schnittlinie III–III in Fig. 5,

Fig. 4 eine Schnittansicht gemäss einem Schnitt senkrecht zur Achse der Trommelwaschmaschine in schematischer Darstellung,

Fig. 5 einen Aufriss eines Ausschnittes einer Trommelwaschmaschine im Bereich einer Schleuse mit teilweise ausgeschnittener Schleuse,

Fig. 6 eine Schnittansicht, ähnlich derjenigen in Fig. 4 mit anderem Zubehör, und

Fig. 7 und Fig. 8 eine Niveau-Einstell- und Konstanthalte-Vorrichtung in Aufriss und Seitenriss.

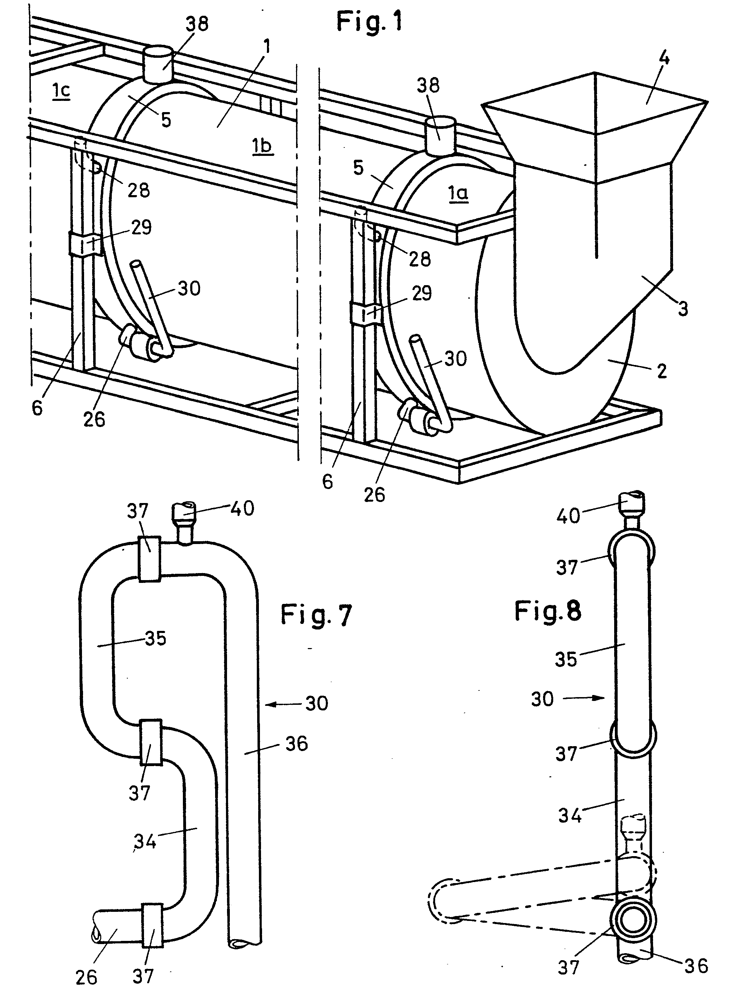

Bei der in Fig. 1 perspektivisch dargestellten Trommelwaschmaschine 1 sind drei Abschnitte dargestellt, nämlich der Einfüllabschnitt 1a mit Abschlusswand 2, Einfüllschacht 3 und Einfülltrichter 4, ein zweiter Behandlungsabschnitt 1b und ein weiterer Behandlungsabschnitt 1c.

Im Abschnitt 1a und zwischen den beiden Abschnitten 1b und 1c sind zwei Schleusen 5 dargestellt. Der Trommelwaschmaschinenmantel 1 ist in ein Rahmengestell 6 eingebaut, dabei sind die Lagermittel und Antriebsmittel aus Gründen der Übersichtlichkeit weggelassen. Solche Antriebs- und Lagermittel gehören zum Stand der Technik und bestehen z.B. aus den Hohlzylinder umfassenden Rollflächen und diese unterstützende Rollen. Durch Friktionsschichten auf diesen Rollen kann eine Antriebskraft auf den Hohlzylinder übertragen werden.

Die beiden dargestellten Schleusen 5 sind je mittels Haltelaschen 29 an vertikalen Stützen des Rahmengestells 6 befestigt. Ferner lassen sich Einlaufbogen 28 für die Waschmittelzufuhr, Niveaueinstellmittel mit den zugehörigen Ablaufbogen 26 und dazu noch Abdampfrohre 38 unterscheiden.

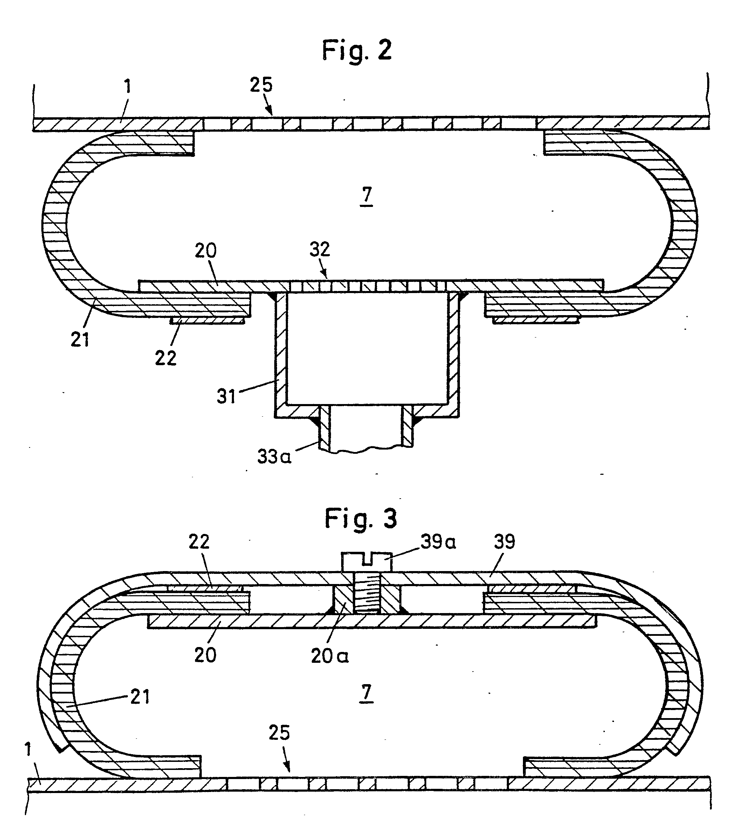

Nachfolgend wird der Aufbau der Schleuse im Detail anhand der Schnitt-Figuren 2 bis 5 beschrieben, in welchen Figuren jeweils ein Ausschnit des Trommelwaschmaschinenmantels 1 im Schnitt und mit Lochpartien 25 gezeigt ist. Der Schleusenraum 7 ist gemäss dem Ausführungsbeispiel mit einem Schleusenring 20 und zwei Gummibändern 21 nach aussen verschlossen. Der Schleusenring 20 besteht aus einem flachen Metallband, das zusammengeschweisst ist und einen in sich geschlossenen Ring bildet. Dieser Ring ist gemäss Fig. 1 mittels der Haltelaschen 29 am Rahmengestell 6 befestigt.

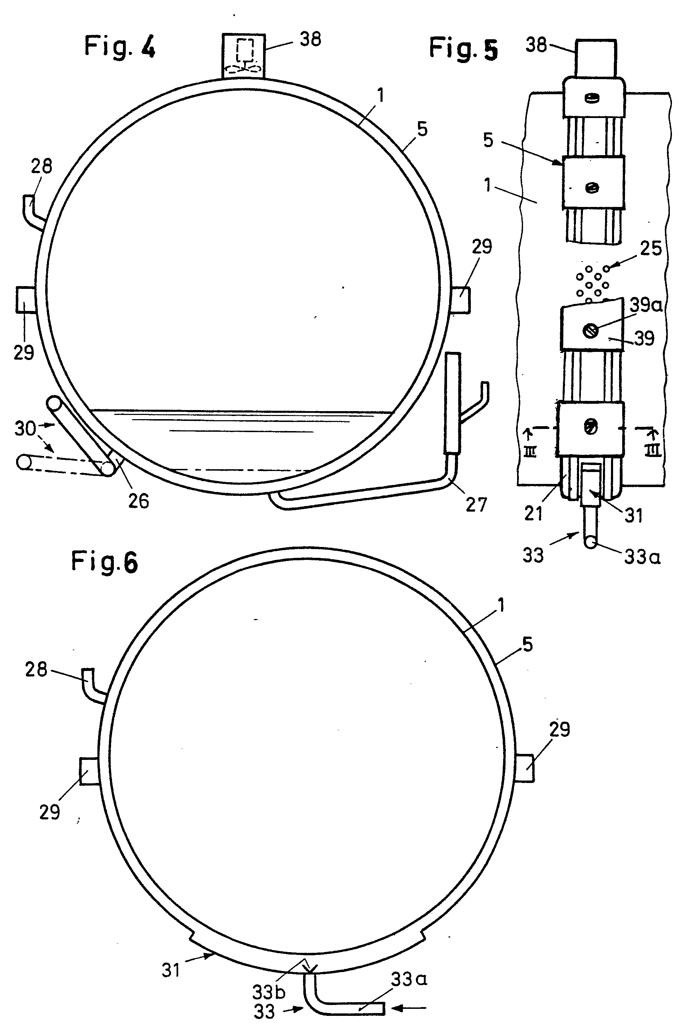

Gemäss dem Ausführungsbeispiel nach Fig. 2 und 3 sind die Gummibänder 21 mittels Spannbänder 22 am Schleusenring 20 befestigt. Auf den Umfang des Schleusenringes 20 verteilt sind mehrere Formbleche 39 am Schleusenring 20 beispielsweise mittels Schrauben 39a und Gewindeaugen 20a befestigt. Diese Formbleche 39 umfassen die Gummibänder 21 aussenseitig und bewirken eine gleichmässig nach aussen gewölbte oder konvexe Form der Gummibänder 21, die mit einer Partie auf dem Mantel 1 aufliegen. Durch Wasser oder Flotte oder dergleichen kann auf diese Weise bewirkt werden, dass der Anpressdruck der Gummibänder 21 vergrössert und damit die Gefahr einer Leckage vermindert wird.

Während Fig. 3 einen Schnitt durch die Schleuse an einer beliebigen Stelle auf dem Umfang, jedoch bei einem Formblech zeigt, ist in Fig. 2 die untere Partie einer Schleuse gezeigt, um die Heizung des Wassers in der Trommel zu erläutern. Im Querschnitt zeigen sich wieder der Trommelmantel 1 mit den Löchern 25, der Schleusenring 20 und die beiden mittels Spannbänder 22 am Schleusenring 20 befestigten Gummibänder 21.

Der Schleusenring 20 weist an dieser Stelle eine gelochte Partie 32 und eine Heiztasche 31 auf. Diese Heiztasche 31 erstreckt sich, wie aus Fig. 6 zu erkennen ist, auf einem geringen Teil des Umfangs des Schleusenringes. An dieser Heiztasche 31 ist ein Zuführrohr 33a für Dampf vorhanden. Durch einen dauernd aufrechterhaltenen Dampfdruck in der Heiztasche 31 wird das Wasser in der Trommel bzw. in der Schleuse aus der Heiztasche 31 herausgedrückt und der Dampf muss das Wasser durchwandern und gibt dabei seine Wärme ab. Somit kann ein zusätzlicher Wärmetauscher im Gegensatz zu den bekannten Ausführungsformen vermieden werden und die Waschtemperatur kann viel leichter auf einer gewünschten Höhe eingestellt und gehalten werden. Indem jede Schleuse mit einer derartigen Heiztasche versehen sein könnte, liesse sich auf einfache Weise jede Waschtrommel aufheizen, was bei bekannten Ausführungsformen nicht der Fall war.

Der Schleusenring 20 ist gemäss der dargestellten Form auch im Gebiet der Heiztasche 31 durchgehend flach ausgebildet. Es liessen sich auch Heiztaschen denken, bei denen die gelochte Partie 32 gegenüber den ausserhalb des Rohres 33a gelegenen Seitenpartien des Schleusenringes 20 gegen die Mantelfläche 1 hin vorstehend oder in die Heiztasche 31 zurückversetzt angeordnet sein könnte.

Die im Schnitt dargestellten Schleusen gemäss Fig. 4 und 6 zeigen den Mantel 1 des Hohlzylinders, den Schleusenring 5 mit den Haltelaschen 29 und somit den Schleusenraum 7. Seitlich ist ein Einlaufbogen 28 für die Zugabe von Waschmittel oder dergleichen vorgesehen. Fig. 4 zeigt das Abdampfrohr 38 und andeutungsweise darin einen Ventilator zum Zeichen, dass das Abdampfrohr mit einem Entlüftungssystem versehen sein kann. Am Ablaufbogen ist ein Niveauschlauch 30 befestigt, der zwischen zwei Endlagen einstellbar ist, von denen die eine mit durchgehenden Strichen und die andere strichliert gezeichnet ist, um damit das Flüssigkeitsniveau nach bekannter Art einzustellen. Ein Niveaubogen 27 ist mit einer Überlaufsicherung versehen, um bei ungesteuertem Einfüllen von Wasser ein Überfüllen des jeweiligen Trommelabschnittes und damit ein Überlaufen in benachbarte Trommelabschnitte zu vermeiden. Fig. 6 zeigt die Heizvorrichtung 33 mit der Heiztasche 31 schematisch im Schnitt und mit der Dampfzuleitung 33a sowie mit den Dampfleitblechen 33b.

Fig. 5 zeigt die beiden Schleusen nach Fig. 4 und 6 im Seitenriss und zum Teil aufgeschnitten. In der Trommelwandfläche 1 sind im Bereich der Schleusen mehrere Lochfelder 25 verteilt, die auf etwa ¾ des Umfanges angeordnet sind. Auch hier sind wieder der Schleusenring 20 mit den beiden Gummibändern 21, den zugehörigen Spannbändern 22 sowie den Formblechen 39 zu erkennen. Auf der unteren Seite ist die Heizvorrichtung 33 mit der Heiztasche 31 und der Dampfleitung 33a gemäss Fig. 6 und auf der oberen Seite das Abdampfrohr 38 angedeutet.

Die Fig. 7 und 8 zeigen einen Niveauregler 30 im Aufriss und im Seitenriss, wo auch eine erste Stellung in ausgezogenen Strichen und eine zweite Stellung strichpunktiert dargestellt sind. Im wesentlichen besteht das Ablaufrohr aus einem Fallrohr 36 mit einem Entlüftungsstutzen 40, einem anschliessenden ersten Rohrgelenk 37, dann anschliessend einem ersten Rohrbogen 35 und einem zweiten Rohrbogen 34, die unter sich und mit dem Ablaufbogen 26 je mit einem Rohrgelenk 37 verbunden sind. Diese Ablauf- bzw. Überlaufvorrichtung zur Niveau-Einstellung und Verstellung kann anstelle des Niveauschlauches 30 vorgesehen sein.

Aus diesen Beispielen wird deutlich, dass die in der Aufgabenstellung angestrebten Verbesserungen erreicht wurden. Nämlich, es sind keine komplizierten Bestandteile, wie zu einem Ring geformte L- oder Z-Profile, vorhanden, die zudem noch auf dem gesamten Umfang mit der Mantelfläche zu verschweissen sind. Bei einem Trommeldurchmesser von 1,5 m, wie der heute üblich ist, gibt schon dies eine beträchtliche Einsparung. Die Armaturen können fest mit der Schleuse verbunden bleiben, es braucht keine aufwendigen Verschiebeeinrichtungen.

Die Gummibänder 21 können derart bemessen und profiliert sein, dass sie unter der eigenen Elastizität satt und dichtend auf der Mantelfläche aufliegen. Damit braucht eine derartige Schleuse nicht mit Abdeckungen zum Schutz vor Spritzern und/oder Dampfstrahlen versehen zu sein. Das Wasser, die Flotte, usw. können direkt im Trommelabschnitt erwärmt werden; es bedarf somit keiner Wärmetauschern und Umwälzpumpen. Somit kann zusammengefasst gesagt werden, dass die vorgeschlagene Schleuse eine höhere Betriebssicherheit verschafft und sowohl in der Herstellung als auch im Betrieb billiger ist.

## Patentansprüche

1. Anordnung zum Zuführen und Wegführen von flüssigen und/oder gasförmigen Medien zu einem bzw. von einem liegenden rotierbaren Hohlzylinder, insbesondere einer Trommelwaschmaschine, indem mit einem starr mit einem feststehenden Rahmenteil verbundenen, den Hohlzylinder umfassenden Schleusenring und beidseitig dieses Schleusenrings angeordneten Dichtungsmitteln ein Schleusenraum gebildet ist, und die Verbindung vom Schleusenraum in den Hohlzylinder durch Löcher auf wenigstens einem Teil des Umfangs der Mantelfläche im Gebiet des Schleusenraums gewährleistet ist, dadurch gekennzeichnet, dass die Dichtungsmittel elastische Dichtungsbänder (21) sind, die den Schleusenring (20) umfassen, am Umfang mittels Spannelementen (22) dichtend gehaltert sind und deren freie Kantenpartien auf der äusseren Mantelfläche des Hohlzylinders (1) dichtend aufliegen.

2. Anordnung nach Patentanspruch 1, dadurch gekennzeichnet, dass die Dichtungsbänder (21) in den Schleusenraum (5) hinein umgebogen sind, derart, dass der Schleusenraum (5) zwischen Mantelfläche des Hohlzylinders (1) und Schleusenring (20) konvex gewölbt verschlossen ist.

3. Anordnung nach Patentanspruch 2, dadurch gekennzeichnet, dass auf dem Umfang des Schleusenrings (20) verteilte Formbleche (39) vorhanden sind, um die elastischen Dichtungsbänder (21) formstabil zu haltern.

4. Anordnung nach einem der Patentansprüche 1 bis 3, dadurch gekennzeichnet, dass der Schleusenraum (5) wenigstens angenähert bei seinem tiefsten Gebiet durch Löcher (32) im Schleusenring (20) mit dem Innenraum eines am Schleusenring (20) einstückig befestigten Gehäuses (31) kommuniziert, welches Gehäuse (31) zwecks Erwärmung der Flotte mit einer Zuführleitung (33a) für ein heisses Gas versehen ist.

5. Anordnung nach Patentanspruch 4, dadurch gekennzeichnet, dass bei der Eintrittsstelle der Zuführleitung (33a) im Gehäuse (31) Strahlleitbleche (33b) zur Verteilung des einströmenden heissen Gases vorhanden sind.

6. Anordnung nach Patentanspruch 1, dadurch gekennzeichnet, dass die Spannelemente zur Halterung der Dichtungsbänder (21) auf dem Schleusenring (20) Spannbänder (22) sind.

7. Anordnung nach Patentanspruch 6, dadurch gekennzeichnet, dass die elastischen Dichtungsbänder (21) flache Bänder aus Gummi sind.

8. Anordnung nach Patentanspruch 6, dadurch gekennzeichnet, dass die elastischen Dichtungsbänder (21) profilierte Kautschukbänder mit Abmessungen zum satt und dichtenden Anliegen auf der Mantelfläche infolge der eigenen Elastizität sind.

9. Anordnung nach einem der Patentansprüche 1 bis 8, dadurch gekennzeichnet, dass der Schleusenraum (5) wenigstens angenähert bei seinem höchsten Gebiet mit einer Abdampfvorrichtung (38) versehen ist, dass ferner ein Niveaurohr (30), bestehend aus mehreren mit Gelenkmuffen (37) verbundenen Rohrstücken (34 bis 36), zur Niveaueinstellung mit dem Schleusenraum (5) verbunden ist, und dass am Schleusenring (20) ein Einlaufrohrbogen (28) für die Zufuhr von Behandlungsmitteln vorhanden ist.

**Claims**

1. A device for supplying and carrying away liquid and/or gaseous media to and from a horizontal rotatable hollow cylinder, particularly a drum washing machine, wherein a lock chamber is formed with a lock ring rigidly connected to a stationary frame member and surrounding the hollow cylinder and sealing means disposed at both sides of this lock ring, and the connection from the lock chamber into the hollow cylinder is ensured by holes over at least a portion of the periphery of the generated surface in the region of the lock chamber, characterised in that the sealing means are resilient sealing bands (21) which surround the lock ring (20), are held at the periphery with a sealing action by means of gripping elements (22) and the free edge portions of which rest on the outer generated surface of the hollow cylinder (1) with a sealing action.

2. A device as claimed in Claim 1, characterised in that the sealing bands (21) are bent over into the lock chamber (5) in such a manner that the lock chamber (5) is convexly curved and locked between the generated surface of the hollow cylinder (1) and the lock ring (20).

3. A device as claimed in Claim 2, characterised in that shaped plates (39) are present, distributed over the periphery of the lock ring (20) so as to keep the resilient sealing bands (21) stable in shape.

4. A device as claimed in one of Claims 1 to 3, characterised in that the lock chamber (5) communicates, at least approximately at its lowest region, through holes (32) in the lock ring (20) with the interior of a housing (31) secured in one piece to the lock ring (20), which housing (31) is provided with a supply pipe (33a) for a hot gas for the purpose of heating the washing solution.

5. A device as claimed in Claim 4, characterised in that sheet-metal jet guides (33b) are present at the entry point of the supply pipe (33a) into the housing (31) to distribute the hot gas flowing in.

6. A device as claimed in Claim 1, characterised in that the gripping elements for holding the sealing bands (21) on the lock ring (20) are tension bands (22).

7. A device as claimed in Claim 6, characterised in that the resilient sealing bands (21) are flat bands of rubber.

8. A device as claimed in Claim 6, characterised in that the resilient sealing bands (21) are profiled rubber bands with dimensions for bearing snugly with a sealing action against the generated surface as a result of their natural resilience.

9. A device as claimed in one of Claims 1 to 8, characterised in that the lock chamber (5) is provided, at least approximately at its highest region, with an evaporator (38), that furthermore a level tube (30) consisting of a plurality of lengths of tube (34 to 36) connected by link-boxes (37) is connected to the lock chamber (5) to adjust the level, and that an inlet tube bend (28) is present on the lock ring (20) for the supply of treatment agents.

**Revendications**

1. Dispositif pour amener des produits liquides et/ou gazeux à un cylindre creux horizontal en rotation, notamment à une machine à laver à tambour, ou pour les évacuer de ce cylindre, dispositif dans lequel un espace d'éclusage est constitué avec un anneau d'écluse entourant le cylindre creux et relié rigidement à une partie fixe de bâti, ainsi qu'avec des moyens d'étanchement disposés des deux côtés de cet anneau d'écluse, la communication entre l'espace d'éclusage et le cylindre creux étant assurée par des trous sur une partie au moins de la périphérie de la surface enveloppe du cylindre dans la zone de l'espace d'éclusage, dispositif caractérisé en ce que les moyens d'étanchement sont des bandes d'étanchement élastiques (21) qui entourent l'anneau d'écluse (20), maintenues de façon étanche sur la périphérie au moyens d'éléments de bridage (22), et dont les parties libres de bordure s'appliquent de façon étanche sur la surface enveloppe externe du cylindre creux (1).

2. Dispositif selon la revendication 1, caractérisé en ce que les bandes d'étanchement (21) sont courbées à l'intérieur de l'espace d'éclusage (5) de façon que cet espace d'éclusage (5) entre la surface enveloppe du cylindre creux (1) et l'anneau d'écluse (20) soit fermé par un bombement convexe.

3. Dispositif selon la revendication 2, caractérisé en ce que des tôles de forme (39) sont réparties sur la périphérie de l'anneau d'écluse (20) pour maintenir sous une forme stable les bandes d'étanchement élastiques (21).

4. Dispositif selon l'une des revendications 1 à 3, caractérisé en ce que l'espace d'éclusage (5), au moins approximativement dans sa zone la plus basse, communique par des trous (32) dans l'anneau d'écluse (20) avec l'espace interne d'un boîtier (31) fixé d'une seule pièce sur l'anneau d'écluse (20), ce boîtier (31), pour chauffer l'eau de lavage, étant muni d'une canalisation d'alimentation (33a) pour un gaz chaud.

5. Dispositif selon la revendication 4, caractérisé en ce qu'à l'emplacement d'entrée de la canalisation d'alimentation (33a) dans le boîtier (31), il est prévu des tôles déflectrices de jet (33b) pour répartir le gaz chaud entrant.

6. Dispositif selon la revendication 1, caractérisé en ce que les éléments de bridage pour le maintien des bandes d'étanchement (21) sur l'anneau d'écluse (20) sont des bandes de bridage (22).

7. Dispositif selon la revendication 6, caractérisé en ce que les bandes élastiques d'étanchement (21) sont des bandes plates en caoutchouc.

8. Dispositif selon la revendication 6, caractérisé en ce que les bandes élastiques d'étanchement (21) sont des bandes de caoutchouc profilées dimensionnées pour s'appliquer pleinement et de façon étanche sur la surface enveloppe du cylindre par suite de leur élasticité propre.

9. Dispositif selon l'une des revendications 1 à 8, caractérisé en ce que l'espace d'éclusage (5), au moins approximativement dans sa zone la plus haute, est muni d'un dispositif d'évacuation de vapeur (38), un tube de niveau (30) constitué de plusieurs tronçons de tubes (34 à 36) reliés par des manchons d'articulation (37), étant reliés à l'espace d'éclusage (5) pour permettre le réglage du niveau, tandis qu'il est prévu sur l'anneau d'écluse (20) un tube coudé d'introduction (28) pour l'alimentation en produits de traitement.

# Fig.1

# Fig.7

# Fig.8

# Fig. 2

# Fig. 3

Fig. 4

38

28

29

29

1

5

29

30

26

27

Fig. 5

38

5

1

25

39a

39

III III

21 31

33 33a

Fig. 6

28

29

29

1

5

29

31

33b

33a

33

11